# EUROPEAN PATENT APPLICATION

(11) **EP 1 528 497 A1**
(43) Date of publication of application: **04.05.2005**
(21) Application number: 04256343.7
(22) Date of filing: 14.10.2004
(51) Int. Cl.: G06F 17/60

(54) **Method and apparatus for controllably reporting block instrument trades**

(30) Priority: 16.10.2003 US 687578
(71) Applicant: New York Stock Exchange, New York, NY 10005 (US)
(72) Inventor: Burkhardt, Roger, Irvington New York 10533 (US); Flax, Daniel Marc, New York, NY 10010-5333 (US)
(74) Representative: Beresford, Keith Denis Lewis

(57) **Abstract**

An exchange through which one or more trades of a security were executed issues an advertisement indicating the security, the amount traded over a given period, the trader and other pertinent information along with an indication that these trades were executed in the exchange. This enables the recipient of these advertisements to receive for the first time added confidence of trading capability in a given security.

## Description

### FIELD OF THE INVENTION

The present invention relates generally to methods and apparatuses for trading instruments, and more particularly to a method and apparatus for reporting data related to trading instruments.

### BACKGROUND

Trading firms that provide intermediary services typically wish to advertise their trading volumes to potential customers to garner additional business. Institutional investors are heavily influenced in their choice of intermediary by recent business that a given intermediary has conducted in a particular security because some institutional investors believe that such recent business in the particular security indicates that the intermediary will be effective in buying and selling the particular security on their behalf. In the institutional equities arena, for example, the advertisement of large volumes of trading activity in security or sector may generate both immediate incremental trading business as well as lucrative corporate finance mandates if the market share is sustained over time.

Commercial services that provide forums for advertising of recent trades suffer from a lack of credibility because some contributors inflate their statistics. The problem has become so endemic that advertising trading activity in a given security can lead to an increase in advertising by one's competitors indicating similar volumes, thereby obscuring the field for potential consumers of these services. As a result, consumers of this information tend to view such advertisements with a jaundiced eye, thereby removing potential benefits of advertising these trades.

In addition, many intermediaries may not wish to disclose their trades in certain securities for regulatory reasons or reasons related to risk the intermediary has assumed in a given security. Knowledge that an intermediary has taken on a specific long or short position in a security can be used by other traders to create considerable trading losses for that intermediary.

The present invention is therefore directed to the problem of developing a method and apparatus for enabling consumers of trading advertisements to obtain added confidence in advertisements of trading activity about potential intermediaries.

### SUMMARY OF THE INVENTION

The present invention solves these and other problems by providing a trusted source providing added confidence to the accuracy of a given block trade advertisement while simultaneously providing control over the advertisement to the potential advertiser.

According to one aspect of the present invention, an exchange through which one or more trades of a security were executed issues an advertisement indicating the security, the amount traded over a given period, the trading firm and other pertinent information along with an indication that these trades were actually executed within the exchange. This combination of elements in each advertisement enables a recipient of such advertisements to receive for the first time a reliable indication of trading capability in a given security. As the advertisement originates from the exchange, a recipient can at least know that the exchange is not likely to issue an advertisement hyping the trading capacity of a given trader, as could occur in existing advertisements issued directly from a trader, but rather that the exchange probably has some data, which could of course be erroneous, supporting the advertisement.

Other advantages and benefits of the inventions set forth herein will be evident upon review of the description below in light of the following drawings.

### BRIEF DESCRIPTION OF THE DRAWINGS

FIG 1 depicts an exemplary embodiment of an apparatus for reporting block trades via an exchange in which the block trades were executed according to one aspect of the present invention.

FIG 2 depicts an exemplary embodiment of a method for reporting block trades according to another aspect of the present invention.

FIG 3 depicts another exemplary embodiment of a method for reporting block trades according to still another aspect of the present invention.

### DETAILED DESCRIPTION

It is worthy to note that any reference herein to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

Most securities markets require immediate publication of trades but do not identify the trading firms involved. This document distinguishes between an "advertisement" that identifies the trade size, the price and the trading firm and a "print" that just shows the trade size and price. Moreover, typically a print will include a trade at a particular moment in time without aggregation of trades made by the same trading firm subsequent to that moment in time, or may be an aggregation of multiple trading firms' trades that were aggregated at that moment in time.

As used herein, the phrase "asset/rightlliability" refers to any tradable commodity or item of value in which there exists a market, however small, for trading or any security or other commodity that can be divided. Examples include: securities, equities, bonds, futures, mutual funds, hedge funds, investment clubs, derivatives, currencies (both national and foreign), commodities, insurance contracts, mortgages, high-yield debt, foreign debt, convertible debt, notes, pollution rights, development rights, leases, loans, real estate investment trusts, etc. Although the computer-based system of the present invention can be used for any such asset/right/liability, for brevity the discussion herein relates primarily to its use in connection with tradable instruments or securities, and particularly to stocks. The phrase "assets, rights or liabilities" refers to any collection of assets, rights or liabilities.

Successful trading firms would like to advertise their actual trading volumes, which for maximum impact will include both periodic reports (e.g., for investment banking prospects) and real time advertising to attract institutional trading business. However, if these firms advertise, then others may obscure their advertisements with similar, but not necessarily true, trading figures, thereby detracting from the effectiveness of such advertising. The present invention enables a successful firm to employ a trusted third party to ensure the accuracy and truthfulness of the advertisement.

Such firms may also need to be able to delay publication of sensitive trades, in which instance the knowledge might be used against them in the marketplace. For example, if a firm has traded a large block and to facilitate this trade the firm had to commit its own capital to take a long position in the security, then the firm may not want its involvement in the print advertised for fear that other market participants may drive the price in the security down causing significant financial losses to the firm. If the intermediaries are participants in the U.S. equities market then the intermediaries are regulated entities that are not permitted to advertise in certain securities that are "restricted." Moreover, large financial services holding companies desire the flexibility to aggregate their trading volumes across a group to gain an advertising benefit of larger volume and often as a way to maintain confidential the breakdown of activity between different subsidiaries.

According to one aspect of the present invention, a method and system for providing added confidence to advertised trades operates as follows. Data on trading volume is collected from clearing records that drive clearance and settlement thus ensuring that the source data is verifiable. Currently, a data feed to the clearance and settlement firms includes this real-time trading data, which includes an identification of both sides of the trade, as well as a particular security involved, a price and a volume associated with the trade. According to one aspect of the present invention, this trading data is then stored in a database, which allows sorting and querying of the information stored therein. Moreover, trading firms are provided limited and controlled access to the data stored therein through application programming interfaces that permit these trading firms to set parameters that define subsequent advertisements that include their trading capacity, which parameters enable *inter alia* aggregation of trades over a given trading period, blocking of advertisements in a given security, and/or delay of an advertisement for a controllable period of time.

In any given trade, the trading entity may be different from the clearing entity. So, the system of the present invention provides an opportunity to the entity that reports the trade to enter the trading identifier of the actual trading entity that should get credit for the volume. This may occur at the time an order is sent to the participating market venue, *e.g.*, the New York Stock Exchange. This trading identifier may, at the trading firm's option, be aggregated across the group of trading subsidiaries that may make up a larger firm (*e.g.*, by using one of the definable parameters discussed above). Then, the trades can be advertised in real-time (or near real-time with a traditional 15-20 minute delay) based upon threshold parameters that each trading firm sets up on a security-by- security basis. For example, the trading firm may prefer to group together a series of small trades and only distribute the advertising message when the cumulative volume meets a threshold that is potentially significant for that stock. This aggregation could prevent advertising that might suggest a given firm is a small player rather than the large player it holds itself out as. In addition, this aggregation would also prevent overwhelming potential consumers of this information with a large number of generally irrelevant advertisements.

The trade advertisements can then be distributed using standard market data distribution mechanisms to market data vendors and/or directly to the institutions that are the "customer end users." In the U.S. Equities markets, this data will follow and supplement the real-time trade reporting that is distributed through various regulated entities. The data may be presented, for example, in the traditional electronic ticker tape presentation. An example of data for equity trades would include some or all of: Broker mnemonic, Stock, Volume, and Average price, such as:
YYY XXX 100 25.3
in which "YYY" represents a broker mnemonic, XXX represents a security symbol, 100 is the volume in predefined blocks (such as 1000 shares) and 25.3 represents a price or average price.

Potential consumers of this information, such as end user institutions, have the option of subscribing to a data feed with an optional volume threshold. Thus, each consumer could have a filter that filters out those advertisements that do not meet their prescribed preferences in security, volume or other definable parameters, such as trading firm, etc.

According to another aspect of the present invention, the system also provides a series of real-time interfaces that allow trading firms to control the advertisement of a trading block report. These interfaces include:
1. Specifying parameters that defer advertisement of trades for a period based on the size of the report and the security concerned.
2. Allowing a firm to add the trading identifier after the trade is executed to give the firm trade-by-trade control. In this instance, the trading firm sends a code that indicates that it knows the clearing record concerned and an algorithm ensures that no duplicate credits are allowed. This approach requires duplicative software development by every firm that needs the control. Alternatives include:
3. A software linkage to a trading firm's position management system that suppresses the advertising of a block when the firm has a significant position, thus maintaining the confidentiality of these positions. The advertisements can be released after the trading firm has worked its way out of the position or hedged the risk to its satisfaction.
4. The ability of a software linkage to block trades that are on a restricted list of securities about which the entity is not allowed to advertise. The contents of this list are often very confidential because they may relate to merger and acquisition work so the software linkage is again "blind" in that the contents of the list do not leave the trading firm's computers.
5. Once a sensitive block is released for advertising it will be flagged as a delayed advertisement. Market participants will have seen a print on the regular "tape" and now will know which firm was responsible.

End user institutions have the option of subscribing to a special feed that highlights when sensitive blocks have not been released, this information by definition has very high value and is likely to remain valuable even after some time has passed.

### Exemplary Embodiment

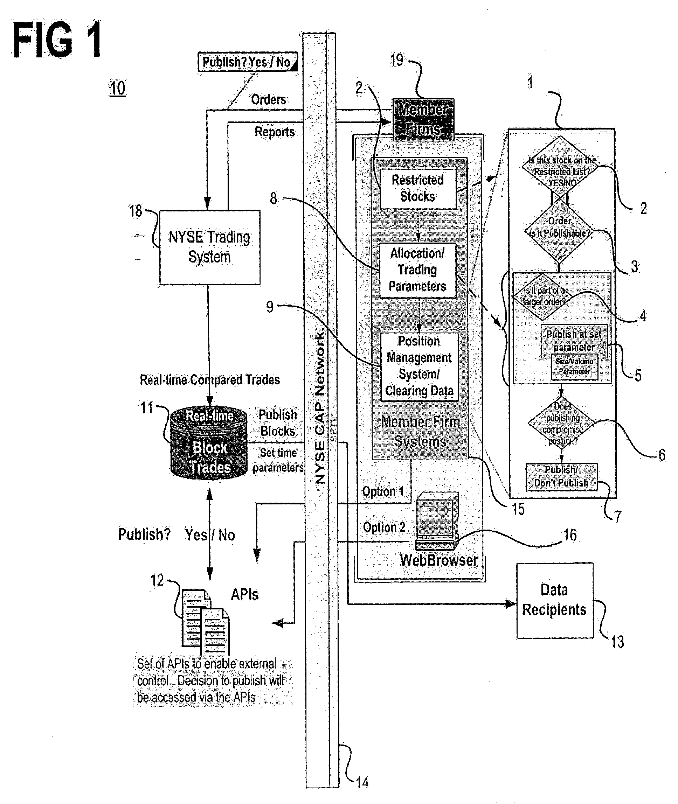

Turning to FIG 1, shown therein is an exemplary embodiment 10 for reporting block trades from an exchange through which the trades were executed. Embodiment 10 *inter alia* includes a database 11 to capture all real-time compared trades (*i.e.*, trades that have both sides of the trades identified). Database 11 also allows Member Firms 19 to create parameters 8 to publish their block trades through the use of Application Programming Interfaces (APIs) 12, which also act as a "publish control lever" allowing Member Firms 19 to access and publish block trades from the real-time database 11 under their direct control.

Real-time compared trade data creates greater market transparency. A real-time compared trades database 11 provides accurate block trade information. Member Firms 19 can access the database containing their compared trade data in real-time. Member Firms 19 control what information is published via a "publish control lever" by configuring publishing parameters 8, which are stored locally in the Member Firms' system 15 and are managed by the Member Firms 19. The database 11 also distributes the published trade information via market data services to its recipients or subscribers 13 via, *e.g.,* the NYSE CAP Network 14 or another network.

The Real-time Block trades database 11 receives real-time compared data from, for example, NYSE Post Trade systems. Member Firms 19 control the publication of their firm's block trade data using a mechanism known as the Publish Control Lever. One example of the Publish Control Lever includes a set of Application Program Interfaces (APIs) 12 that are accessible via a direct connection to the Member Firm's system 15 and/or a Web interface 16. Data recipients 13 receive data over the NYSE CAP network 14 (which is a high speed, high reliability, secure computer network).

For example, the trading firm can use existing internal systems to send a message in a predefined format, e.g., such as the Financial Information Exchange (FIX) format, which allow user defined formats. These messages would include specification of the above-mentioned parameters to the real-time database, thereby enabling the control over subsequent advertisements by this firm. Moreover, these messages can be sent on a per security basis, thereby enabling different control for each security.

Alternatively, trading firms can use a web-based interface that allows the trading firm to specify these control parameters to the database. For example, a browser screen would list the control parameters for each stock, thereby enabling specification of these parameters on this basis. This screen might also list global parameters that the trading firm might wish to specify, such as a delay period from trade in which to publish the advertisement.

Member Firms 19 may decide to publish block trade data for a variety of reasons but mainly to maintain their position as high volume traders in certain securities. The following are some conditions why firms may not want to publish block trade information.
- Stocks may be on the restricted list (see element 2, FIG 1)
- Order could be part of a larger order
- Order may be too small to publish and firms may want to only publish an aggregate volume
- Firms may not want to advertise the volume for block prints.
- Publishing may jeopardize the firm's position (which is managed by the firm's position management system 9)

On the other hand, firms may want to publish their block trade information to improve market transparency by having real-time compared trade data available, and to enhance public image to generate interest in trading the advertised security.

Member Firms 19 will send their orders in the normal manner through the NYSE CAP Network 14 to the NYSE Trading System 18. Each order will be flagged as a publishable or non-publishable order. This can be accomplished by providing a user-defined field under the Financial Information Exchange (FIX) protocol. This field would be filled with either a publish flag or a non-publish flag. Thus, the system can operate open loop using the publish flag or closed loop using the API's. Orders are then filled and reports are sent back to the Member Firms 19.

Once the trades are cleared they are sent, in real-time, to database 11, e.g., the RT Block Trades database. Member Firms use the APIs 12 as a Publish/Control Lever to publish their block trade data. APIs 12 enable Member Firms to set publishing parameters. The APIs 12 allow this data to be published from the new RT Block Trades database 11 under direct control of the Member Firms.

Member Firms can access their block trade information in real-time through two different connections. Their decision to publish block trade information can be based on a variety of strategic criteria. One possible connection to the APIs 12 is a direct connection through the NYSE CAP Network 14. An alternative connection would allow Member Firms to access the APIs 12 via a Web Browser 16 executing on a standard computer terminal, personal computer, laptop, personal digital assistant or other handheld device.

All publishable block trade data is disseminated through the NYSE CAP Network 14 to all data recipients 13 on a set time schedule.

Member Firms can set aggregation parameters 8 such that when a specified volume is reached, the aggregated total can be published as a block. To determine if blocks are publishable, Member Firm set conditions, which may include: size, sector, side of the market, and various combinations of these.

Once a block meets the parameter's condition and can be published, the firm may decide how publishing would affect their position by, e.g., sending the proposed block to be advertised to the firm's Position Management System/Clearing Data 9. Data that has not been published may be made available for other uses after a variable period of time, thereby generating additional revenue.

Member Firms can access the APIs 12 via a connection through the NYSE CAP Network 14. The following connections enable firms to access the APIs 12.
· Member Firms can have a direct connection through the NYSE CAP network 14 to publish data.
· Member Firms may also access to the APIs 12 through a web browser 16.

Time parameters for disseminating data to recipients are configurable.

An exemplary embodiment 1 of a method for determining whether to publish an order is shown in FIG 1 as well. If the stock is on the restricted list 2, publication is halted. Next, the determination is made if the order is publishable 3. For example, the order may be part of a larger order 4. If not, then the publication parameters are reviewed, against which the decision to publish is determined 5. Finally, prior to publication, assuming all other tests are met, the determination is made as to whether publication may affect the Member Firm's position in the market 6. The final publish/no publish decision is made using the above criteria 7. This decision is then used to activate the publish control lever, as discussed above.

### RT Blocks Database 11

The RT Blocks Database comprises a standard, query-based database that enables storage of associated information, queries of this information and reporting of the results of such queries. This database receives cleared System Compared sides, Locked-in trade information, and Crowd Compared sides information in real-time; stores cleared sides data until the Publish Control Lever is set to publish data; includes configurable parameters for publishing time; and sends publishable data for distribution. Publishable data from the RT Blocks database can be published via market data services over the NYSE CAP Network 14 to data recipients 13.

### Application Programming Interfaces

Application Programming Interfaces (APIs) 12 allow for configurable fields; e.g., volume delete level, volume aggregate block level, aggregate by mnemonic, etc. In addition, the APIs 12 control publication of stocks on the restricted list, provide alert system and indicator to flag potential publishable trades and allow for publication suppression. The APIs 12 also provide a direct connection to Member Firms for access and provide Member Firm access via the web browser.

An exemplary embodiment of these API's includes a web browser executing on a personal computer, which is coupled to the Real-time Database via a computer network. The web browser displays a graphical user interface via which a user can enter parameters that control the flow of advertisements associated with that user, *i.e.,* a member firm system operator. This allows the user to enter links to other databases that contain the restricted stock list, thereby ensuring this information remains inaccessible to other persons not permitted to view this information. The user can also enter aggregation parameters for each stock to ensure the advertisements have value. Once the user has entered this information into the web browser page, the information is transmitted using XML or similar code to the real-time database and entered into appropriate control fields that filter the advertising data feed on a continuing or regular basis.

### Another Exemplary Embodiment

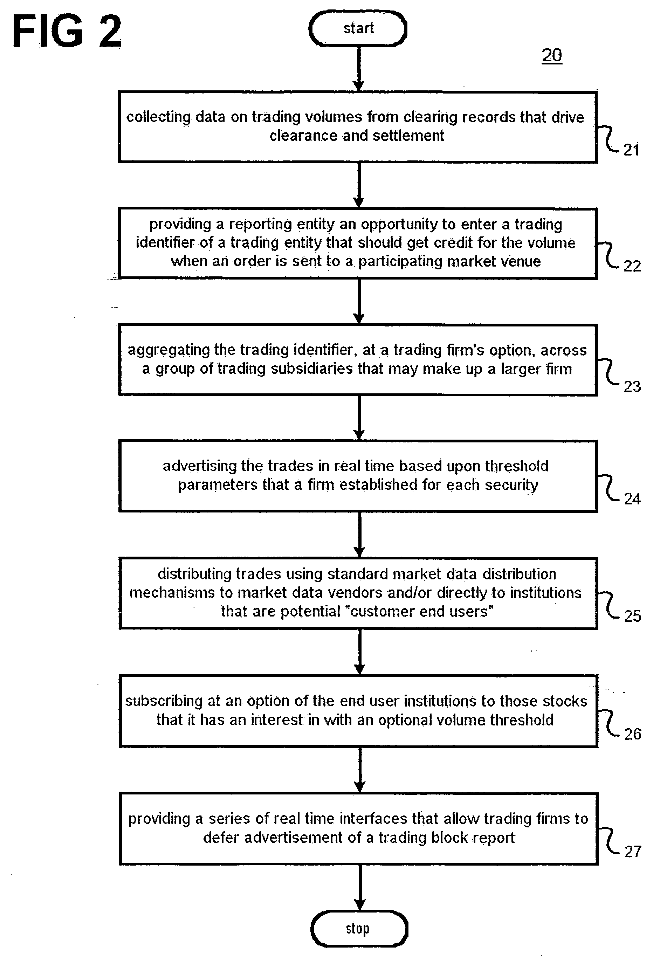

Turning to FIG 2, shown therein is an exemplary embodiment 20 of a method for reporting block trades from an exchange through which the trades were executed. First, data on trading volumes is collected from clearing records that drive clearance and settlement (element 21). When an order is sent to a participating market venue, a reporting entity is provided an opportunity to enter a trading identifier of a trading entity that should get credit for the volume (element 22). Subsequently, the trading identifier, at a trading firm's option, can be aggregated across a group of trading subsidiaries that may make up a larger firm (element 23). The trades are then advertised in real time based upon threshold parameters that each trading firm establishes on a security-by-security basis, if desired (element 24). Finally, the advertised trades using standard market data distribution mechanisms to market data vendors and/or directly to institutions that are potential "customer end users" (element 25). At an option of the end user institutions, these institutions may subscribe to data feeds for specific stocks in which it has an interest along with an optional volume threshold (element 26). In addition, several real time interfaces are provided that allow trading firms to control advertisement of a trading block report, which control includes deferring advertising certain trading block reports (element 27).

### Another Exemplary Embodiment

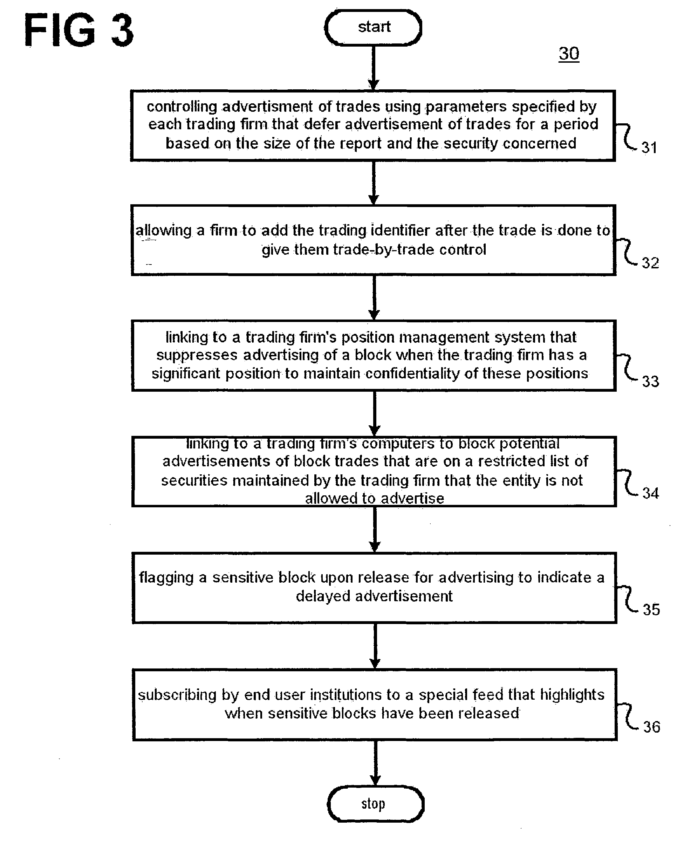

Turning to FIG 3, shown therein is an exemplary embodiment 30 of a method for controlling the reporting of block trades from an exchange through which the trades were executed. Advertisement of trades is controlled using parameters specified by each trading firm that defer advertisement of trades for a period based on the size of the report and the security concerned (element 31). A firm is allowed to add the trading identifier after the trade is executed to provide the firm trade-by-trade control (element 32). A link is provided to the trading firm's position management system that suppresses advertising of a block when the trading firm has a significant position to maintain confidentiality of these positions (element 33). A link is also provided to a trading firm's computers to block potential advertisements of block trades that are on a restricted list of securities maintained by the trading firm that the entity is not allowed to advertise (element 34). A sensitive block is flagged upon release for advertising to indicate a delayed advertisement (element 35). End user institutions can subscribe to a special feed that highlights when sensitive blocks have been released (element 36).

One exemplary embodiment of the advertisement can include a digital signature from the issuer of the trading data (e.g., the exchange) indicating that the attached information is valid data. Any attempt to modify the data would result in corruption of the digital signature, thereby preventing validation: Thus, the advertisement would always include the exchange's digital signature wherever posted thereby authenticating the advertisement.

It should be noted that as with any data originating from an exchange, any indications of trades are not "guarantees" that the underlying trades: meet any federal, state or local laws or regulations; will not be reversed later; are not fraudulent; do not involve insider trading; or other unstated warranties. The indications here merely indicate that the issuer (usually the exchange) probably has trading data that supports the attached advertisement. No recipient should place any reliance on this advertisement other than that the issuer may have trading data that currently supports the attached advertisement. However, the data could be erroneous. Moreover, no privity of contract should exist between a subsequent recipient of this advertisement and the issuer.

It should also be noted that the term real-time as used herein or near real-time refers to data that can be delayed up to 15-20 minutes at the discretion of the operator. The system operator controlled delay parameter would allow control over different product pricing tiers, e.g., gold service is rendered in near real-time, bronze service is sent in hourly summaries, etc., and regulatory categories. As the advertisements herein are typically aggregations of trades that are reported in other market data that conforms to these requirements, at the time of writing it remains unclear as to whether this data would be subject to these revenue sharing requirements. Thus, the embodiments herein can include an operator controllable delay to enable avoidance of these regulatory requirements.

Although various embodiments are specifically illustrated and described herein, it will be appreciated that modifications and variations of the invention are covered by the above teachings and are within the purview of the appended claims without departing from the spirit and intended scope of the invention. For example, certain computer networks and existing connections are depicted in the diagrams and discussed herein, however, other networks and connections can perform similar functionality. Furthermore, these examples should not be interpreted to limit the modifications and variations of the invention covered by the claims but are merely illustrative of possible variations.

## Claims

1. A method for reporting block trades comprising:
advertising a block trade of a particular security indicating a volume associated with the block trade; and attaching to the advertisement an indication by an exchange that the block trade was executed through the exchange.

2. The method according to claim 1, further comprising including an identifier of the trading firm with the advertisement.

3. The method according to claim 1, wherein the advertising is conducted under control of the trading firm.

4. A method for advertising trades in one or more assets, rights and/or liabilities comprising:
collecting data on trading volumes from clearing and settlement records;
providing a reporting entity an opportunity to enter a trading identifier of a trading entity that should get credit for the volume when an order is sent to a participating market venue; and aggregating the trading identifier, at a trading firm's option, across a group of trading subsidiaries that may make up a larger firm.

5. The method according to claim 4, further comprising advertising the trades based upon one or more threshold parameters that a firm establishes for each security.

6. The method according to claim 5, further comprising distributing trade advertisements using a market data distribution mechanism.

7. The method according to claim 6, further comprising enabling a consumer to specify a stock and optionally a volume threshold for each stock about which the consumer desires to receive trade advertisements.

8. The method according to claim 4, further comprising providing an interface that allows a trading firm to control advertisement of a trade.

9. A method for reporting block trades comprising:
advertising a block trade of a particular security indicating a volume associated with the block trade; and including with the advertisement an indication by an exchange that the block trade was executed through the exchange.

10. The method according to claim 9, further comprising:
controlling advertising of trades using parameters specified by each trading firm that defer advertisement of trades for a period based on the size of the report and the security concerned.

11. The method according to claim 10, further comprising allowing a trading firm to add the trading identifier after the trade is completed to provide trade-by-trade control.

12. The method according to claim 10, further comprising linking to a trading firm's position management system to enable a trading firm to suppress advertising of a block of a particular security.

13. The method according to claim 10, further comprising linking to a trading firm's computers to block potential advertisements of block trades that are on a restricted list of securities maintained by the trading firm.

14. The method according to claim 10, further comprising flagging a sensitive block upon release for advertising to indicate a delayed advertisement.

15. The method according to claim 10, further comprising subscribing by end user institutions to a special feed that highlights when sensitive blocks have been released.

16. An apparatus for reporting block trades comprising:
a database storing information related to block trades, including a security, a size and a trading firm; a trade interface coupled to the database via which the database receives block trade information; a trading firm interface to the database via which a trading firm enters one or more parameters for publishing block trades; and a data feed coupled to the database and outputting published block trades in accordance with the trading firm established parameters.

17. The apparatus according to claim 16, wherein the data feed includes an advertisement of a block trade of a particular security indicating a volume associated with the block trade and an indication with the advertisement by an exchange that the block trade was executed through the exchange.

18. The apparatus according to claim 17, wherein the advertisement includes an identifier of the trading firm.

19. The apparatus according to claim 17, wherein the advertisement is published under control of the trading firm.

20. The apparatus according to claim 16, further comprising an interface coupling the database to a trading firm's position management system to enable a trading firm to suppress advertising of a block of a particular security.

21. The apparatus according to claim 16, further comprising an interface coupling the database to a trading firm's computers to block potential advertisements of block trades that are on a restricted list of securities maintained by the trading firm.

22. An apparatus for permitting controllable advertising of trading comprising:
a user interface via which a user enters one or more control parameters regarding subsequent trade advertisements; a database storing trade information coupled to the user interface over a computer network, said database operated by a trusted third party and receiving user specified control parameters from one or more users; and a trade advertisement data feed output from the database under control of the trusted third party, said trade advertisement data feed being filtered in accordance with the user specified control parameters including one or more advertisements of trades, each of which advertisements includes a trading firm, a price, a size and a security.

23. The apparatus according to claim 22, wherein the user interface comprises a web browser.

24. The apparatus according to claim 22, wherein the user interface comprises an application programming interface.

25. A method for advertising trades of assets, rights and/or liabilities comprising providing a trusted source providing added confidence to accuracy of a block trade advertisement; and providing simultaneously control over the advertisement to a potential advertiser.

26. The method according to claim 25, wherein said providing control includes enabling the advertiser to set one or more parameters electronically with which subsequent advertisements are published in accordance.

27. The method according to claim 26, wherein said one or more parameters includes a volume threshold below which no trades are advertised.

28. The method according to claim 26, wherein said one or more parameters includes a list of securities about which no trades are advertised.

29. The method according to claim 26, wherein said one or more parameters includes a list of related trading firms over which to aggregate trading volume before advertising.

30. The method according to claim 25, further comprising delaying advertisement under control of the potential advertiser or the exchange for a controllable period of time.

31. The method according to claim 25, further comprising provides an indication in a order indicating whether a trade resulting from the order should be included as an advertisement or not and an identification of a trading firm that should get credit for the trade.

32. The method according to claim 31, further comprising transmitting a data feed including a plurality of block trade advertisements from the trusted source.

33. The method according to claim 32, further comprising:
receiving the data feed by a subscriber; and filtering the data feed in accordance with a plurality of subscriber definable parameters that indicate one or more instruments about which a recipient desires to receive information included in the data feed.

34. The method according to claim 33, wherein the plurality of definable parameters includes a volume associated with each advertisement.

35. The method according to claim 25, wherein the potential advertiser can block one or more advertisements.

36. The method according to claim 33, wherein said filtering includes identifying an advertisement of a trade that has been delayed by an advertiser.

37. The method according to claim 25, wherein said providing a trusted source includes inserting a digital signature from the trusted source as evidence of a source of the advertisement.
